# EUROPÄISCHE PATENTSCHRIFT

(11) **EP 1 554 738 B1**
(45) Veröffentlichungstag und Bekanntmachung des Hinweises auf die Patenterteilung: **22.08.2007**
(21) Anmeldenummer: 03773484.5
(22) Anmeldetag: 02.10.2003
(51) Int. Cl.: H01F 41/30, H01F 41/34

(54) **VERFAHREN ZUR HERSTELLUNG EINES RINGFÖRMIGEN MIKROSTRUKTURELEMENTES**
METHOD FOR PRODUCING AN ELEMENT COMPOSING AN ANNULAR MICROSTRUCTURE
PROCEDE DE REALISATION D'UN ELEMENT CONSTITUANT UNE MICROSTRUCTURE ANNULAIRE

(30) Priorität: 22.10.2002 DE 10249207
(43) Veröffentlichungstag der Anmeldung: 20.07.2005
(73) Patentinhaber: Qimonda AG, 81739 München (DE)
(72) Erfinder: KERSCH, Alfred, 85640 Putzbrunn (DE); RABERG, Wolfgang, F-77300 Fontainebleau (FR); SCHWARZL, Siegfried, 85579 Neubiberg (DE)
(74) Vertreter: Epping - Hermann - Fischer
(86) Internationale Anmeldenummer: PCT/DE2003/003284
(87) Internationale Veröffentlichungsnummer: WO 2004/040603

(56) Entgegenhaltungen:
- US-A1- 2002 042 158

## Beschreibung

Die vorliegende Erfindung betrifft ein Verfahren zur Herstellung eines ringförmigen Mikrostrukturelementes, insbesondere eines ringförmig angeordneten ein- oder mehrlagigen Dünnschichtfilms auf einem Substrat zur Verwendung in einem magnetorresistiven Speicher (MRAM).

Dünnschichtfilme werden beispielsweise zur Herstellung von GMR (Giant Magneto-Resistance) oder TMR (Tunneling Magneto-Resistance) Elementen in Speichern gebildet. GMR-Elemente weisen mindestens zwei ferromagnetische Schichten auf, zwischen denen eine nichtmagnetische, leitende Schicht angeordnet ist, welche den sogenannten GMR-Effekt aufzeigt. Bei diesem ist der durch die drei Schichten beziehungsweise Dünnfilmschichten elektrische Widerstand abhängig von der Ausrichtung der Magnetisierung in einer der beiden ferromagnetischen Schichten relativ zu der Magnetisierungsrichtung der anderen ferromagnetischen Schicht. Als stabile Zustände der Magnetisierung können sich dabei eine parallel oder antiparallele Ausrichtung ergeben.

TMR-Elemente weisen mindestens zwei ferromagnetische Schichten auf, zwischen denen jeweils eine isolierende, nichtmagnetische Schicht angeordnet ist. Diese ist hinreichend dünn strukturiert, so daß es zu einem Tunnelstrom von einer ersten zu einer zweiten der ferromagnetischen Schichten kommen kann. Ähnlich wie bei den GMR-Elementen besteht der magnetorresistive Effekt darin, unterschiedliche Widerstandswerte je nach einer parallelen oder antiparallelen Ausrichtung der Magnetisierung der beiden ferromagnetischen Schichten aufzuweisen. Der durch die zwischen den beiden ferromagnetischen Schichten angeordnete dünne Schicht fließende spinpolarisierte Tunnelstrom unterliegt bei dem TMR-Effekt im Vergleich zum GMR-Effekt größeren Widerstandsänderungen, welche bis zu 40 % betragen können.

Die genannten GMR- beziehungsweise TMR-Elemente können vorteilhaft in Speicherzellen zur Speicherung einer binären Information eingesetzt werden. Während die eine der beiden ferromagnetischen Schichten üblicherweise mit einer im wesentlichen unveränderbaren Magnetisierungsrichtung strukturiert wird, besitzt die zweite ferromagnetische Schicht die Eigenschaft, durch ein von außen angelegtes Magnetfeld hinreichender Stärke von dem parallelen in den antiparallelen Zustand bzw. umgekehrt umprogrammiert werden zu können. Ein solches Magnetfeld kann beispielsweise mittels der durch sich kreuzende Wort- und Bitleitungen erzeugten und überlagerten Magnetfelder gebildet werden. Die Programmierung einer Speicherzelle erfolgt demnach über eine entsprechende Ansteuerung der Wort- und Bitleitungen.

Aus der Druckschrift M.N. Yoder, "Microelectronics-Nanoelectronics and the 21th Century", p. 2-7, IEEE 2001, sind ringförmige ein- oder mehrlagige Dünnschichtsysteme als GMR- oder TMR-Elemente bekannt. Sie bieten den Vorteil eines geschlossenen Magnetflusses innerhalb der Ringe, so daß nach außen über den lokalen Bereich des Speicherlementes hinaus nur während eines zur Programmierung durchgeführten Ummagnetisierungsprozesses magnetische Störfelder auftreten. Da somit insbesondere auch benachbarte magnetoresistive Speicherelemente magnetisch abgekoppelt werden können, ist es theoretisch möglich höhere Integrationsdichten von Dünnfilmschicht-Mikrostrukturelementen in Speicherzellenanordnungen zu erreichen.

Die Möglichkeit höhere Integrationsdichten in der biherigen Praxis zu erreichen ist jedoch durch die im folgenden beschriebenen Nachteile der konventionellen Verfahren zur Herstellung von auf Dünnschichtfilmen basierenden Mikrostrukturelementen begrenzt:
1. Auf ein Substrat, welches beispielsweise monokristallines Silizium und eine Anzahl von auf dem Silizium angeordneten und strukturierten Schichten umfaßt, wird zunächst das ein- oder mehrlagige Dünnschichtsystem ganzflächig abgeschieden. Im Falle von GMR- oder TMR-Elementen umfaßt das Dünnschichtsystem wenigstens drei Lagen. Anschließend wird mit lithographischen und ätztechnischen Prozessen das Dünnschichtsystem derart strukturiert, daß lediglich die ringförmigen Mikrostrukturen, welche beispielsweise die wenigsten drei Lagen der Speicherelemente umfassen, zurück bleiben. In dem Lithographieschritt wird ein auf dem Dünnschichtsystem angeordnete, photoempfindlicher Resist mit gewünschter Ringform beilichtet und entwickelt. In dem Ätzschritt werden die in dem Resist erzeugten Strukturen in das Dünnschichtsystem übertragen. Hierzu können bekannte Plasmaätzverfahren wie beispielsweise RIE (Reactive Ion Etching), ECR (Electron Cyclotron Resonanz), ICP (Inductively Coupled Plasma), CAIBE (Chemically Assisted Ion Beam Etching) -Verfahren etc. eingesetzt werden.
   Die von den ferromagnetischen Schichten umfaßten Materialien wie Eisen, Nickel oder Kobalt führen jedoch als Reaktionsprodukte aufgrund ihrer fehlenden Flüchtigkeit zu einer nachteilhaften Redeposition metallischer Schichten an den Ätzflanken der gebildeten Mikrostrukturen. Dies kann wiederum dazu führen, daß an den Außenkanten der Mikrostrukturen Kurzschlüsse entstehen. Ein weiterer Nachteil entsteht dadurch, daß aufgrund des für die Ätzung der ferromagnetischen Schichten erforderlichen verstärkten Ionenbeschusses nur noch eine geringe Selektivität bei der Ätzung des Dünnschichtfilms im Vergleich,zur Ätzmaske, beispielsweise des Resists oder einer Hartmaske, sowie zu einer weiteren metallischen oder dielektrischen Unterlage besteht. Letztere kann beispielsweise Kupfer, Tantal oder Siliziumdioxid umfassen. Es sind daher besonders dicke Resist-oder Hartmasken erforderlich, welches wiederum zu einem Verlust der Maßhaltigkeit bei dem Strukturtransfer die zu schrägen Ätzflanken an den Mikrostrukturen führt. Eine laterale Isolation der TMR- oder GMR-Elemente beispielsweise durch dielektrische Spacer wird dadurch erschwert.
   Wird ein chlorhaltiges Gas für den Plasmaätzprozeß eingesetzt, so kann es außerdem insbesondere bei antiferromagnetischem Eisen-Mangan oder Iridium-Mangan zu einer nachteilhaften Korrosion des Schichtsystems kommen.
2. Um der beschriebenen Problematik mit den Reaktionsprodukten zu entgehen kann auch eine sogenannte Damascene-Technik eingesetzt werden, bei der die Strukturbildung zunächst in einer bereits vorliegenden dielektrischen Schicht vorgenommen wird, welche als Grabenstrukturen anschließend in einem Abscheideprozeß mit den gewünschten Filmen gefüllt werden. Außerhalb der gebildeten Graben bzw. Lochstrukturen überstehende Schichtanteile werden beispielsweise in einem chemisch-mechanischen Polierprozeß (CMP) bis zur Oberfläche der dielektrischen Schicht zurückpoliert. Hierbei kann auch ein homogener Ätzprozeß eingesetzt werden. Eine Abscheidung kann beispielsweise durch einen physikalischen oder chemischen Aufdampfprozeß (PVD, CVD) oder eine galvanische Abscheidung durchgeführt werden.
   Da sich allerdings insbesondere bei Mehrlagenschichtsystemen die Schichtfolge vertikal an den Grabenwänden niederschlägt, wird durch den Polierprozeß der Außenrand des Dünnschichtsystems an der Oberfläche des Substrates freigelegt. Hierdurch kann es zum Beispiel zu Kurzschlüssen bei der Kontaktierung mit nachfolgend gebildeten Leiterbahnen kommen.
3. In der Druckschrift DE 100 50 076.5 wird beschrieben, wie Mikrostrukturen der Dünnschichtsysteme durch Aufsputtern oder Aufdampfen der betreffenden Materialien in Lochmasken zu erzielt werden können, welche durch Überhänge in den Lochprofilen, den sogenannten Schattenmasken, in einem oberen Bereich derart eingeschnürt sind, daß die aufgesputterten Teilchen nur einen mittleren Bereich der Grundfläche der Lochstrukturen erreichen können. DE 100 50 076.5 offenbart ein Verfahren zur Herstellung eines Mikrostrukturelementes, umfassend die Schritte : Bereitstellen des Substrates mit einer Oberfläche Bilden wenigstens einer Maskierschicht auf dem Substrat, Bilden einer Öffnung in der Maskierschicht, wobei die Maskierschicht innerhalb der Öffnung mit einem Überhang ausgebildet wird, und ablagern wenigstens eines Materials auf der Oberfläche. Der Vorteil besteht darin, daß die abgeschiedenen Schichten nicht bis zur Grabenwand reichen, da die entsprechenden Teilchen aus dem Sputterprozeß aufgrund des Überhanges in dem Lochprofil nicht die Grabenwand erreichen können. Somit entstehen keine vertikalen Schichtanteile, welche durch einen CMP-Prozeß freigelegt werden könnten.
   Es ist jedoch bisher noch nicht gelungen, einen geeigneten Prozeß zu finden, mit welchem die vorteilhaften ringförmigen Mikrostrukturen durch Anwendung dieser Technik gebildet werden könnten. Das Ausformen eines Loches in der Mitte des Dünnschichtsystems zur Bildung des Ringes würde bei hohen Integrationsdichten die Ausformung einer aufgrund des Überhanges pilzförmigen Struktur erforderlich machen, welche eine hohe physische Instabilität z.B. gegenüber den Einwirkungen von Folgeprozessen aufweisen würde. Hohe Integrationsdichten können durch diese Methode daher nicht erreicht werden.

Es ist daher die Aufgabe der vorliegenden Erfindung, ein Verfahren zur Herstellung ringförmiger Mikrostrukturen anzugeben, mit welchem hohe Integrationsdichten bei hoher Qualität erreicht werden können. Es ist außerdem die Aufgabe der Erfindung, die vorgenannten Nachteile der durch Ablagerung von Reaktionsprodukten in einem Plasmaätzprozeß sich auf den Mikrostrukturen niederschlagenden metallischen Schichten der Folge von Kurzschlüssen zu vermeiden. Es ist insbesondere eine Aufgabe der vorliegenden Erfindung ein Verfahren anzubieten, bei dem ein Plasmaätzprozeß angewendet auf die gebildeten ringförmigen Strukturen nicht mehr erforderlich ist.

Die Aufgabe wird gelöst durch ein Verfahren zur Herstellung eines ringförmigen Mikrostrukturelementes, insbesondere eines ringförmig angeordneten ein- oder mehrlagigen Dünnschichtfilms auf einem Substrat zur Verwendung in einem magnetorresistivem Speicher, umfassend die Schritte: Bereitstellen des Substrates mit einer Oberfläche und einer zu dieser senkrechten Flächennormalen, bilden wenigstens einer Maskierschicht auf dem Substrat, so daß die Maskierschicht die Oberfläche unmittelbar bedeckt, bilden einer Öffnung in der Maskierschicht zum Freilegen eines Verteilbereiches der Oberfläche, wobei die Maskierschicht innerhalb der Öffnung mit einem Überhang derart ausgebildet ist, daß die freigelegt Oberfläche zumindest teilweise durch den Überhang von einem einfallenden Teilchenstrahl abgeschattet wird, ablagern wenigstens eines Materials auf einer ersten Teilfläche der freigelegten Oberfläche mittels eines auf das Substrat gerichteten Teilchenstrahls, welcher einen von 0° verschiedenen Winkel mit der Flächennormalen der Oberfläche einschließt, drehen des Substrates mit der Maskierschicht und der Öffnung relativ zu dem gerichteten Teilchenstrahl zur Ablagerung des Materials auf wenigstens einer zweiten Teilfläche der freigelegten Oberfläche zur Bildung einer ringförmigen Mikrostruktur auf der freigelegten Oberfläche des Substrates.

Gemäß der vorliegenden Erfindung wird zunächst auf einem Substrat, das beispielsweise neben einem monokristallinen Halbleitermaterial wie Silizium als Basis auch mehrere darüber angeordnete Schichten mit dielektrischen, isolierenden, metallischen, dotierten, elektrisch leitenden Strukturen umfassen kann, zunächst eine Maskierschicht gebildet. Bei der Maskierschicht handelt es sich beispielsweise um ein oder mehrere dielektrische Materialien. Die Maskierschicht kann beispielsweise in einem physikalisch verstärkten chemischen Abscheideprozeß (PECVD) auf dem Substrat gebildet werden.

Zur Strukturbildung in der Maskierschicht wird in einem lithographischen Prozeß ein photoempfindlicher Resist auf der Maskierschicht aufgebracht und in einem Belichtungsschritt mit einer Struktur belichtet. Nach Durchführung eines entsprechenden Entwicklerschrittes wird die in der Resistmaske gebildete Struktur in einem Ätzprozeß derart in die Maskierschicht übertragen, daß einerseits ein Teilbereich der Oberfläche des Substrates unterhalb der in dem Resist gebildeten Struktur freigelegt wird, und andererseits das Ätzprofil der Struktur in der Maskierschicht am Fuße des in die Maskierschicht geätzten Grabens ein größeren Durchmesser besitzt als in einem oberen Bereich des Grabens. Es entsteht somit ein Überhang der Maskierschicht, welcher zu einer Abschattung von Teilen der Oberfläche in dem freigeätzten Graben der Maskierschicht führt. Vorzugsweise wird der Überhang derart gebildet, daß er die gesamte Länge des oberen Bereiches des eingeätzten Grabens in der Maskierschicht umfaßt, also rundherum gebildet ist.

Der vorliegenden Erfindung zufolge wird ein gerichteter Teilchenstrahl auf das mit der Maskierschicht bedeckte Substrat und insbesondere in dem freigeätzten Graben beziehungsweise das Loch mit dem Überhang unter einem schrägen Einfallswinkel gelenkt. Gemäß Ausgestaltungen der vorliegenden Erfindung kann der Teilchenstrahl aus einem IBD-Prozeß (Ion Beam Deposition), einem Sputterprozeß mit Ringkathode oder einem gerichteten Aufdampfprozeß, etc. durchgeführt werden. Entscheidend ist, daß ein hinreichender Fokussiergrad beziehungsweise eine geringe Differenz des Teilchenstrahles vorliegt, so daß durch den schrägen Einfallswinkel der durch den Überhang in der Grabenstruktur verkleinerte Lochquerschnitt am Boden des Grabens seitlich versetzt durch den Teilchenstrahl abgebildet wird. Die Ablagerung von Teilchen findet demnach zunächst in einem Seitenbereich teilweise unterhalb eines Überhanges auf der Oberfläche des Substrates statt.

Das Maß der seitlichen Versetzung kann unmittelbar durch die Wahl des schrägen Einfallwinkels des Teilchenstrahls kontrolliert werden. Einschränkend ist hier nur die vertikale Ausdehnung des Überhanges zu beachten.

Gemäß einer Ausgestaltung der vorliegenden Erfindung ist der Winkel zwischen der Flächennormalen der Oberfläche und der Richtung des Teilcheneinfalls mindestens so groß zu wählen, daß auch durch die stets vorhandene Streuung der aufgestrahlten Teilchen nur geringe oder gar keine Anteile in den Schnittpunkt der zu der Flächennormalen parallelen Symmetrieachse des Grabens mit der Oberfläche des Substrates treffen. Diese Position markiert das Loch in dem zu bildenden Dünnschichtfilmsystem, welches diesen zu einem Ring ausbildet.

Durch ein Drehen des Substrates relativ zu dem Teilchenstrahl vorzugsweise unter Beibehaltung der Substratebene, d.h. eines konstanten Einfallswinkels des Teilchenstrahls, werden anschließend von dem Teilchenstrahl weitere, seitlich versetzte Teilbereiche der Oberfläche in den Grabenstrukturen mit einem Teilchenniederschlag zur Schichtbildung versehen. Die durch die Symmetrieachse der Grabenstruktur beschriebene Mitte der freigelegten Oberfläche am Boden der Grabenstruktur wird unter diesen Bedingungen nicht oder kaum mit Teilchenniederschlag belegt.

In den seitlich versetzten Außenbereichen der Oberfläche bildet sich hingegen rundherum ein Dünnschichtsystem. Der Vorgang des Drehens und des Ablagerns von Teilchen in einen gerichteten Strahl kann beliebig erfolgen. Beide Vorgänge, das Drehen und das unter schrägem Einfallswinkel gerichtete Bestrahlen können kontinuierlich parallel oder einzeln oder zusammen jeweils schrittweise erfolgen. Durch die vorliegende Erfindung ist es auch möglich Halbringe zu bilden.

Gemäß einer vorzugsweisen Ausgestaltung der vorliegenden Erfindung wird der gerichtete Teilchenstrahl mit einer Divergenz von weniger als 10° erzeugt. Die Divergenz gibt eine mittlere Winkelabweichung von Streuteilchen gegenüber der Hauptrichtung des gerichteten Teilchenstrahls an. Besonders vorteilhafte Werte für Querschnittsprofile werden mit Strahldivergenzen von weniger als 5 Grad erzielt. Je geringer der Divergenzgrad, desto höher die Fokussierung des Strahls auf die äußeren Teilbereiche der Oberfläche innerhalb der Öffnung. Die nachfolgend das Loch in der ringförmigen Struktur bildende Mitte der Oberfläche wird dadurch vorteilhaft von Teilchenablagerungen freigehalten.

Gemäß einer weiteren Ausgestaltung der vorliegenden Erfindung wird die Öffnung bzw. der Graben mit dem darin gebildeten Überhang in einer kreisrunden oder einer elliptischen Form ausgebildet. Die Form der Öffnung wird beispielweise in dem lithographischen Belichtungsschritt in dem Resist auf der Maskierschicht definiert. Die Wahl einer kreisrunden Form führt durch das erfindungsgemäße Verfahren zu einem kreisrunden Ring von abgelagerten Teilchen in dem Dünnfilm-Schichtsystem auf der freigelegten Oberfläche des Substrates.

Die Größe des Überhangs in der Grabenstruktur bzw. der Öffnung wird gemäß einer vorzugsweisen Ausgestaltung der vorliegenden Erfindung durch Bildung einer wenigsten zweilagigen Maskierschicht ermöglicht. Dazu werden eine erste und eine zweite Schicht mit einer gegenüber einem Ätzprozeß unterschiedlichen Selektivität auf dem Substrat aufgebracht. Beide Schichten umfassen vorzugsweise dielektrische Materialien, beispielsweise Si₃N₄ oder SiO₂. Nach dem lithographischen Prozeß zur Definition der Öffnung in der Maskierschicht wird zunächst ein anisotroper Plasma-Ätzprozeß durchgeführt. Mit diesem wird die in dem Resist auf der Maskierschicht in dem lithographischen Belichtungs- und Entwicklungsschritt gebildete Struktur maßhaltig in die erste und die zweite dielektrische Schicht übertragen. Dadurch wird vorzugsweise bereits die Oberfläche des Substrates freilegt.

Der Überhang wird gebildet, in dem anschließend ein isotroper Naß- oder Trockenätzprozeß durchgeführt wird, welcher die erste, unter dielektrische Schicht selektiv gegenüber der zweiten, oberen dielektrischen Schicht ätzt. Durch diesen "Unterätzen" genannten Prozeß entsteht in der zweiten, oberen dielektrischen Schicht ein Überhang, dessen horizontale Ausdehnung durch eine zeitbestimmte Endpunktkontrolle vergleichsweise genau festgelegt werden kann. Die vertikale Ausdehnung des Überhangs ist im wesentlichen durch die Dicke, der zweiten, oberen dielektrischen Schicht gegeben. Die vertikale und die horizontale Ausdehnung des Überhangs werden mit dem Einfallswinkel des Teilchenstrahls abgestimmt, um die ringförmige Struktur zu erzeugen.

Neben den genannten Bedingungen, daß der Einfallswinkel gegenüber der Flächennormalen hinreichend groß sein muß, so daß der Schnittpunkt der Symmetrieachse mit der Oberfläche am Boden der Öffnung sowie dessen Umgebung nicht oder kaum mit Streuteilchen belegt wird, gilt auch, daß der Überhang eine hinreichend große horizontale Ausdehnung und der Winkel des einfallenden Strahls einen minimalen Wert annimmt. Infolgedessen werden nur wenige oder gar keine Teilchen an dem Rand der auf dem Boden der Öffnung freigelegten Oberfläche abgelagert. Somit entstehen vorteilhaft keine vertikalen Schichtanteile des Dünnschichtsystems an der Grabenwand.

Die Bildung des ringförmigen Mikrostrukturelementes kann fortgesetzt werden, indem die gebildete Öffnung mit einem dielektrischen Material gefüllt und anschließend die dielektrischen Schichten zur Freilegung der Ringstruktur zurückpoliert werden.

Die Erfindung soll nun anhand eines Ausführungsbeispieles mit Hilfe einer Zeichnung näher erläutert werden. Darin zeigen:
- Fig. 1: ein erfindungsgemäßes Ausführungsbeispiel des Verfahrens mit einem schräg einfallenden Teilchenstrahl auf eine mit einem Überhang gebildete Öffnung in einer Maskierschicht auf einem rotierenden Substrat zur Bildung ringförmiger Mikrostrukturen,
- Fig. 2: ein erfindungsgemäßes Ausführungsbeispiel des Verfahrens zur Bildung ringförmiger Mikrostrukturen mit einem durch eine Ionenstrahlkanone und einem Sputter-Target generierten, schräg einfallenden Teilchenstrahl,
- Fig. 3: ein erfindungsgemäßes Ausführungsbeispiel des Verfahrens zur Bildung ringförmiger Mikrostrukturen mit einem aus einer Anzahl von ringförmig angeordneten Segmenten gebildeten Sputter-Targets,
- Figs. 4 - 9: eine beispielhafte Abfolge von Schritten des Verfahrens zur Herstellung der Maskierschicht umfassend eine erste und eine zweite dielektrische Schicht,
- Figs. 10 - 13: Simulationen der Ablagerung von Dünnschichtfilmen aus gerichteten Teilchenstrahlen für verschiedene Profile der Öffnungen und Überhänge.

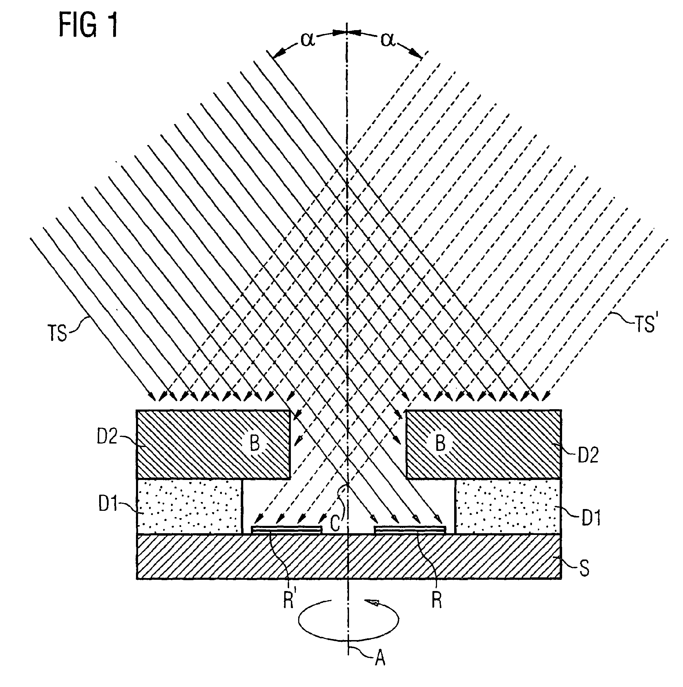

Eine schematische Darstellung der Bestrahlung eines Substrates S mit Teilchen gemäß dem erfindungsgemäßen Verfahren zur Herstellung ringförmiger Mikrostrukturen ist in Figur 1 zu sehen. Die Figur zeigt eine Querschnittsdarstellung durch eine erfindungsgemäß gebildete Öffnung C, welche auf dem Substrat S in einer Maskierschicht gebildet ist. Auf dem Substrat S ist eine erste dielektrische Schicht D1 und eine zweite dielektrische Schicht D2 angeordnet, welche zusammen die Maskierschicht bilden.

Die Öffnung C besitzt ein Querschnittsprofil, bei dem in einem oberen Bereich durch die zweite dielektrische Schicht D2 ein Überhang B geformt wird. Der Durchmesser der Öffnung C ist in diesem oberen Bereich kleiner als derjenige in einem unteren Bereich, welcher durch eine gegenüber der zweiten dielektrischen Schicht D2 zurückgezogene erste dielektrische Schicht D1 gekennzeichnet ist.

Die Bestrahlung mit einem Teilchenstrahl TS wird unter einem Winkel α gegenüber einer auf der Oberfläche des Substrates S senkrecht stehenden Flächennormalen bzw. der Symmetrieachse A der Öffnung C durchgeführt, welcher von Null Grad verschieden ist, d.h. der Teilchenstrahl TS fällt schräg und nicht senkrecht ein. In dem Beispiel beträgt der Winkel α etwa 40 Grad. Der Winkel gegenüber einer durch die Oberfläche des Substrates S aufgespannten Ebene beträgt demnach etwa 50 Grad.

Dort, wo Teilchen auf das freigelegte Substrat oder die zweite dielektrische Schicht D2 treffen, bilden sich infolge der Ablagerung Dünnfilmschichten. Aufgrund der Abschattung durch den Überhang B und aufgrund des schrägen Einfallswinkels α bildet sich in dem Teilchenstrahl TS die Öffnung C des oberen Bereiches der Schicht D2 seitlich versetzt auf der Oberfläche des Substrates am Boden der Öffnung C ab und bildet dort einen Dünnschichtfilm R. Der Winkel α ist dabei so bemessen, daß Teilchen weder am Rand der freigelegten Oberfläche noch in die Mitte treffen können.

Durch Drehung des Substrates S um die Symmetrieachse A in der bisherigen Substratebene wird der Azimuthalwinkel des Teilchenstrahles gegenüber einer Referenzrichtung des Substrates verändert. In Figur 1 ist dies in dem Referenzsystem des Substrates durch einen zweiten Teilchenstrahl TS' illustriert. Dem geübten Fachmann steht es frei das Substrat S zu drehen und die Strahlungsrichtung konstant beizubehalten oder aber das Substrat S zu fixieren und die Strahlungsrichtung zu variieren. Auch Kombinationen aus beidem sind möglich.

Durch den zweiten Teilchenstrahl TS' wird eine zweite, der ersten Teilfläche R gegenüberliegende Teilfläche R' auf der freigelegten Substratoberfläche mit einem Dünnschichtfilm belegt. Durch kontinuierliches Drehen des Substrates S wird daher gleichförmig eine ringartige Mikrostruktur umfassend unter anderem die Teilflächen R, R' als Dünnschichtfilm gebildet.

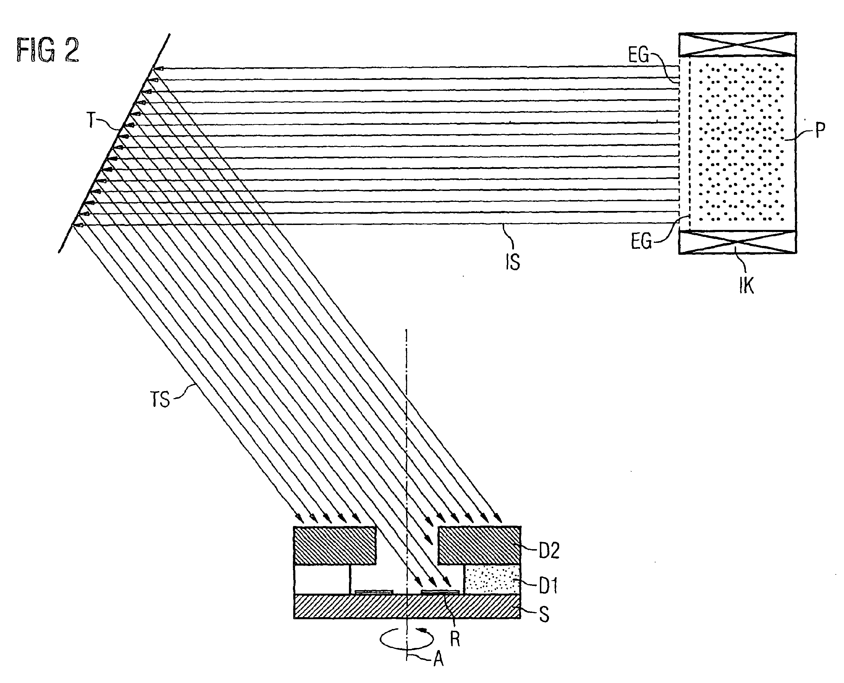

Ein Ausführungsbeispiel zur Erzeugung eines erfindungsgemäßen Teilchenstrahls ist in Figur 2 gezeigt. In einer Ionenstrahlkanone IK wird ein Plasma P erzeugt, aus dem durch ein mit einer Vorspannung beaufschlagten Extraktionsgitter EG Ionen extrahiert und als Ionenstrahl IS in Richtung eines mit einer weiteren Spannung U beaufschlagten Sputter-Targets T beschleunigt werden. Das Sputter-Target T besitzt bei kleiner Ausdehung eine vergleichsweise große Distanz zu dem Substrat S, so daß die Divergenz des Teilchenstrahls TS aus dem Target T herausgeschlagener Teilchen weniger als 10 Grad beträgt.

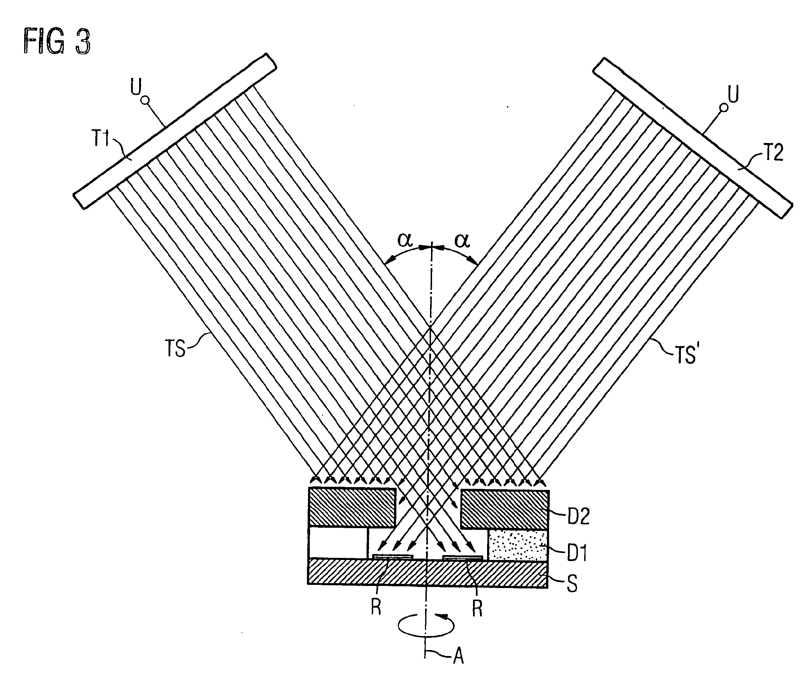

Ein alternatives Ausführungsbeispiel zur Erzeugung eines erfindungsgemäßen Teilchenstrahls ist in Figur 3 gezeigt. Hierbei sind mehrere Teilsegmente T1, T2 eines Sputter-Targets ringförmig oberhalb eines fixierten Substrates angeordnet, so daß durch gleichzeitigen Ionenbeschuß aller Targets T1, T2 aus einer Ionenstrahlkanone IK mehrere Teilchenstrahlen TS, TS' unter dem gleichen Winkel α aus verschiedenen Richtungen auf das Substrat gelenkt werden können. Die Targets T1, T2 sind beispielsweise Kathoden eines RF- bzw. DC-gespeisten Sputtersystems.

Im folgenden wird die Herstellung der für die Bildung der ringförmigen Struktur notwendigen erfindungsgemäßen Öffnung C in der Maskierschicht D1, D2 umfassend den Überhang B beschrieben:

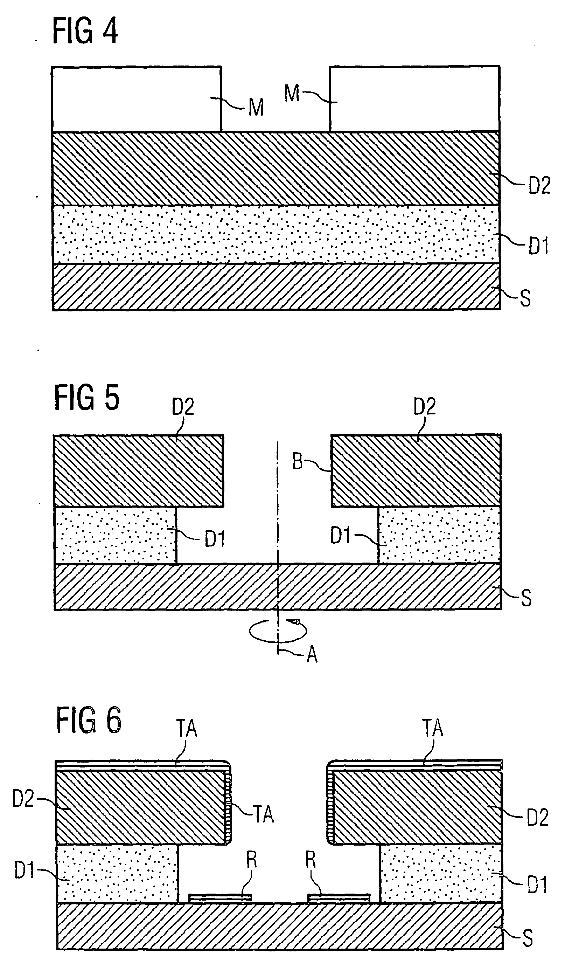

Wie in Figur 4 dargestellt ist, wird auf einem Substrat S, welches monokristallines Silizium sowie eine Anzahl darauf gebildeter Schichten, insbesondere Leiterbahnen aus elektrisch leitfähigem Material zur Kontaktierung des zu bildenden magnetoresistiven ringeförmigen Speicherlementes umfaßt, in einer PECVD-Abscheidung eine 50 nm dicke erste dielektrische Schicht D1 aus Si₃N₄ gebildet. Anschließend wird ebenfalls in einem PECVD-Abscheideschritt eine 200 nm dicke zweite dielektrische Schicht D2 aus SiO₂ auf der ersten dielektrischen Schicht D1 abgeschieden.

Die zweite dielektrische Schicht D2 wird mit einem photoempfindliche Resist belackt und in einem Belichtungsgerät mit einer Struktur von einer Maske photolithographisch belichtet, welche einen Durchmesser von 350 nm besitzt. Zur Bildung einer Resistmaske M wird der Resist entwickelt, so daß die belichteten Bereiche herausgelöst werden (Fig. 4).

Anschließend wird eine anisotrope RIE-Ätzung (reactive ion etching) der zweiten dielektrischen Schicht D2 mit einem Gemisch aus CHF₃, CF₄ und Ar durchgeführt, so daß die belichtete Struktur in diese Schicht transferiert wird.

Die erste dielektrische Schicht D1 umfassend SiO₂ wird nun einer im wesentlichen isotropen RIE-Ätzung mit einem Gemisch aus CF₄, O₂, und SF₆ oder alternativ NF₃ unterzogen. Auch ist eine naßchemische Ätzung mit H₃PO₄ bei 160 bis 180 °C möglich. Die Resistmaske wird danach naßchemisch oder im Plasma mittels H₂, N₂ entfernt (Fig. 5). Durch die isotrope Ätzung wird die zweite dielektrische Schicht D2 innerhalb der durch die Ätzschritte gebildeten Öffnung C unterätzt, so daß rundum ein Überhang B in einem oberen Bereich entsprechend der zweiten dielektrischen Schicht D2 entsteht.

Als nächster Schritt wird die in Figs. 1 - 3 gezeigte und eingangs beschriebene schräge Bestrahlung z.B. durch Aufsputtern eines hochkollimierten Teilchenstrahls unter Drehen des Substrates S durchgeführt. Zur Bildung eines GMR- oder TMR-Speicherelementes sind dazu abwechselnd Targets eines ferromagnetischen und eines dielektrischen (TMR) oder nichtmagnetischen, elektrisch leitenden (GMR) Materials zu verwenden. Innerhalb der Öffnung entsteht somit eine ringförmige, wenigstens dreilagige Dünnschichtstruktur R. Auch auf den horizontalen und vertikalen Flächen der zweiten dielektrischen Schicht schlagen sich Teilchen als dünne Ablagerungsschicht TA nieder (FIG. 6).

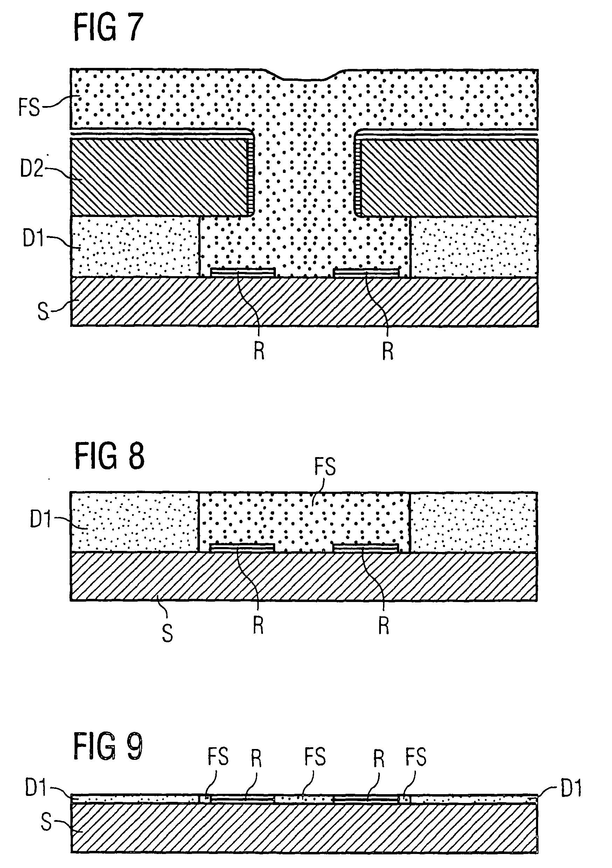

In einem PECVD- oder alternativ einem SOG-Verfahren (Spin-on-Glass) wird zur Verfüllung der Öffnung C SiO₂ als Füllschicht FS abgeschieden (Fig. 7). Diese Schicht FS sowie die zweite dieketrische Schicht D2 werden mit den daran anhaftenden Teilchenablagerungen in einem chemisch-mechanischen Polierschritt (CMP) bis auf eine Oberfläche der ersten dielektrischen Schicht D1 zurückgeschliffen (Fig. 8).

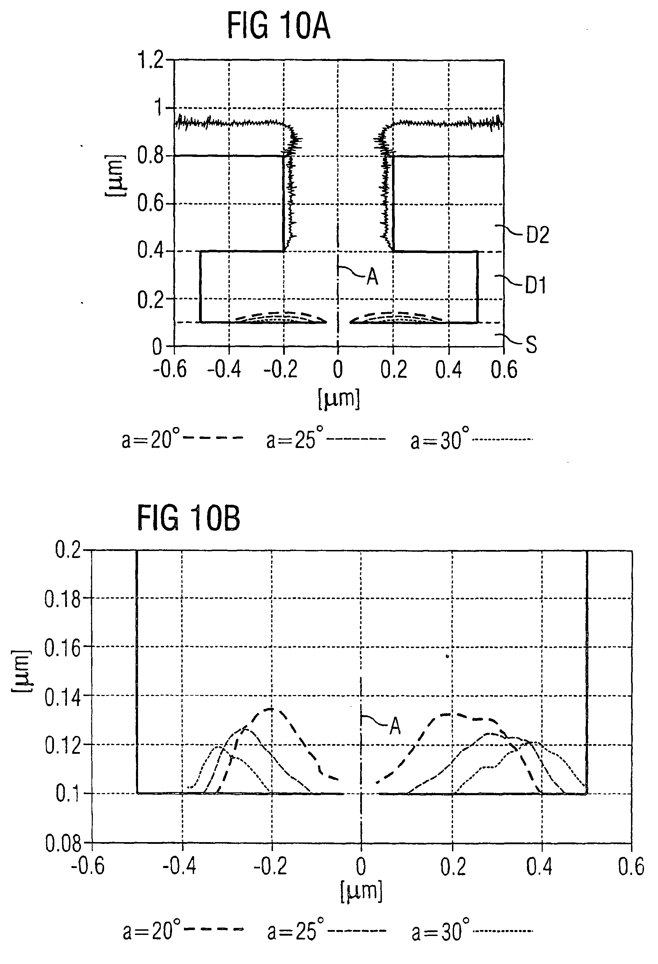

Die ringförmigen Mikrostrukturelemente R werden freigelegt, indem in einem weiteren CMP-Schritt auch die erste dielektrische Schicht D1 umfassend Si₃N₄ in einem CMP-Schritt zurückpoliert wird (Fig. 9).

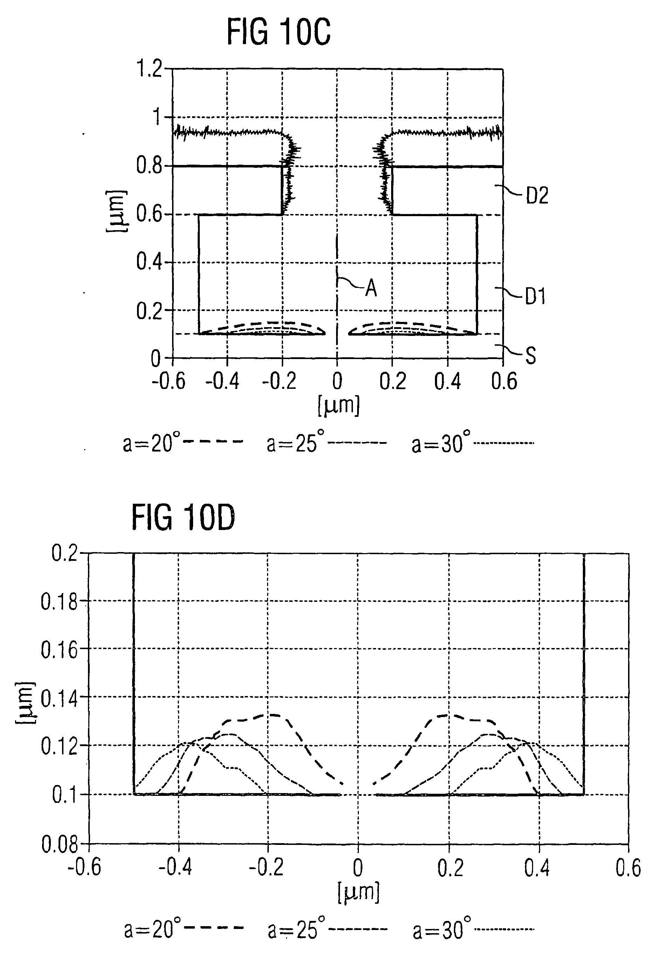

In Fig. 10 ist eine in einem Modell simulierte Schichtabscheidung eines hochkollimierten Teilchenstrahls in verschieden ausgestaltete Öffnungen C der erfindungsgemäßen Schattenmasken in Querschnittsprofilen dargestellt: Figuren 10a und 10b zeigen ein Beispiel mit einer 0.3 µm dicken ersten dielektrische Schicht D1 und eine 0.4 µm dicke zweite dielektrischen Schicht D2 und Figuren 10c und 10d zeigen ein Beispiel mit einer 0.5 µm dicken ersten dielektrischen Schicht D1 und einer 0.2 µm dicken zweiten dielektrischen Schicht D2. Der Überhang der zweiten Schicht D2 gegenüber der ersten Schicht D1 beträgt etwa 0.3 µm.

Die Figuren 10b und 10d zeigen jeweils in einem Diagramm in Richtung der Ordinate (Y-Achse) vergrößert dargestellte Schichtdickenkurven der Figuren 10a und 10c.

Der Teilchenstrahl TS ist in den beiden letztgenannten Beispielen um 20°, 25° bzw. 30° gegen die Flächennormale geneigt. Der Wafer wurde rotiert. Figuren 10b und 10d zeigen in den gestrichelten Linien die Resultate der nach einer Bestrahlung des Substrates S erreichten Schichtdicken, welche über 360 Grad in den runden Lochstrukturen C gemittelt wurden. Die Divergenz des Teilchenstrahles TS beträgt 1° in der Halbwertsbreite. Die erreichten Schichtdicken betragen etwa 20 nm.

Zu flacheren Einfallswinkeln für den Teilcheneinfall hin tritt der durch den Überhang mit der Dicke der zweiten dielektrischen Schicht gebildete Abschirmungseffekt so deutlich hervor, daß die Bildung des Dünnschichtfilms ineffektiv wird, wenn der Winkel gegenüber der Oberfläche weniger als 60° und die zweite Schicht D2 dicker als die erste Schicht D1 ist (Figur 10b).

Zu steileren Einfallswinkeln hin rückt die Schichtabscheidung zu sehr in die Symmetrieachse der Öffnung C - aus einer Ringbildung wird eine Scheibenbildung.

Wird die zweite Schicht D2 und damit der Überhang sehr dünn gewählt, so wird bei sehr flachen Einfallswinkeln der Ring sehr nahe an der Grabenwand gebildet (Figur 10d). Die ist bei Mehrschichtfilmen wie etwa im Falle von TMR-Elementen nachteilhaft, da vertikale Profile entstehen, die nach CMP-Prozessen zur Freilegung der Schichten führen.

Die in Figur 10 gezeigten Parameterintervalle für Schichtdikken, Schichtdickenverhältnisse und Einfallswinkel stellen somit besonders vorteilhafte Kombinationen dar, mit welchen die erfindungsgemäßen Dünnschichtfilmstrukturen gebildet werden können.

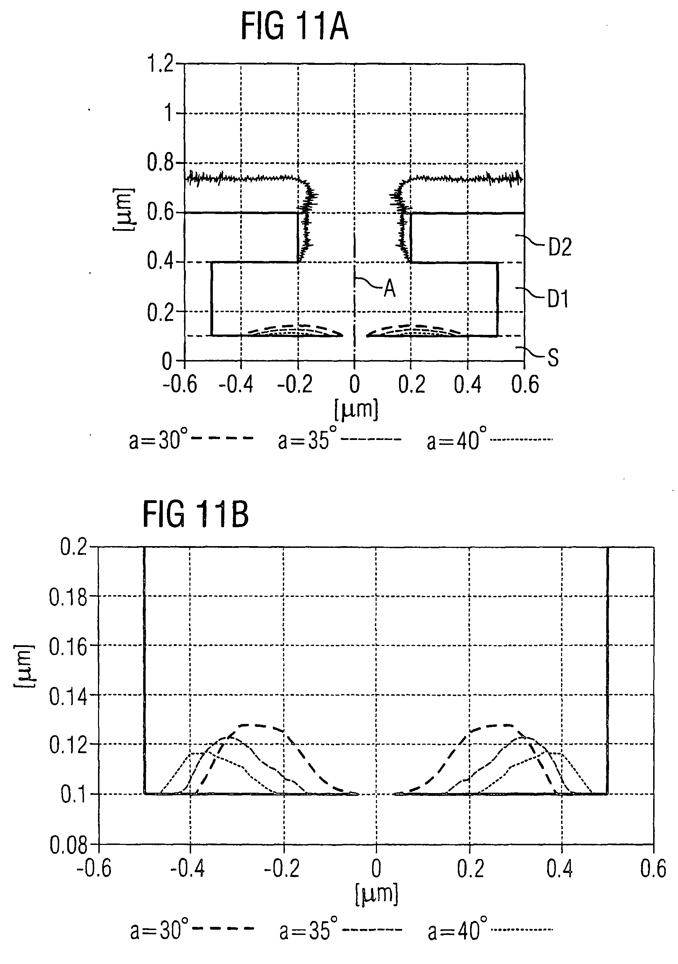

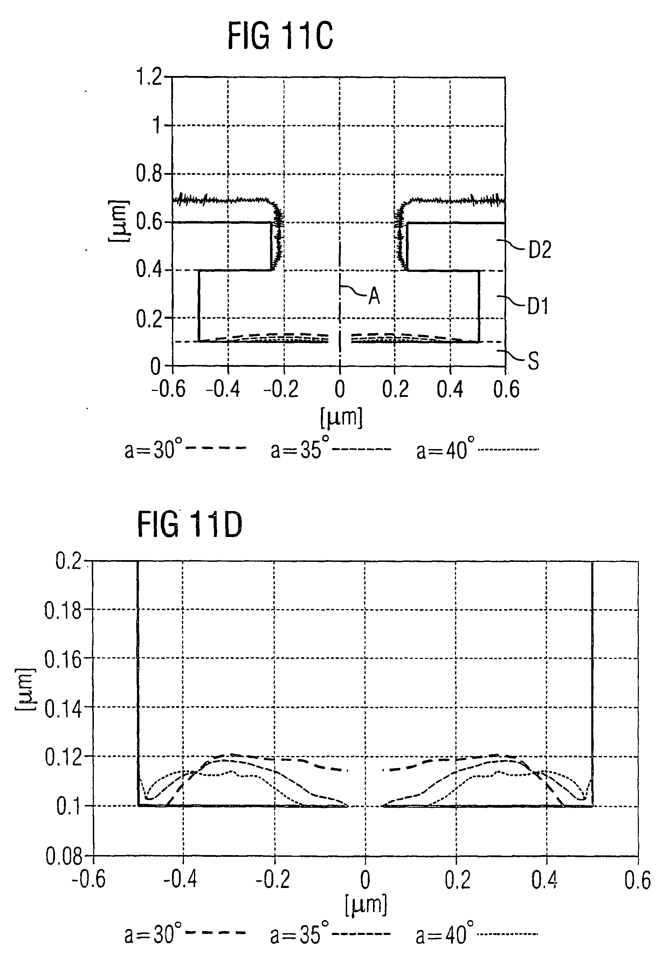

Figur 11 zeigt in analoger Darstellung wie in Fig. 10 das Ergebnis einer Schichtabscheidung in verschiedene Öffnungen C von Lochmaskenstrukturen. Die in Figur 11a und 11c gezeigten Querschnittsprofile der Öffnungen unterscheiden sich in dem Öffnungsdurchmesser, nämlich 0.4 µm (Fig. 11a) bzw. 0.5 µm (Fig. 11c). Die Dicke der Schichten D1 und D2 betragen 0.3 µm bzw. 0.2 µm. Die Teilchenstrahldivergenz beträgt 1°. Bei zu großem Durchmesser der Öffnung C geht vor allem durch Streueffekte die Ringform der Abscheidung verloren, wie der Vergleich der Figuren 11b und 11d zeigt.

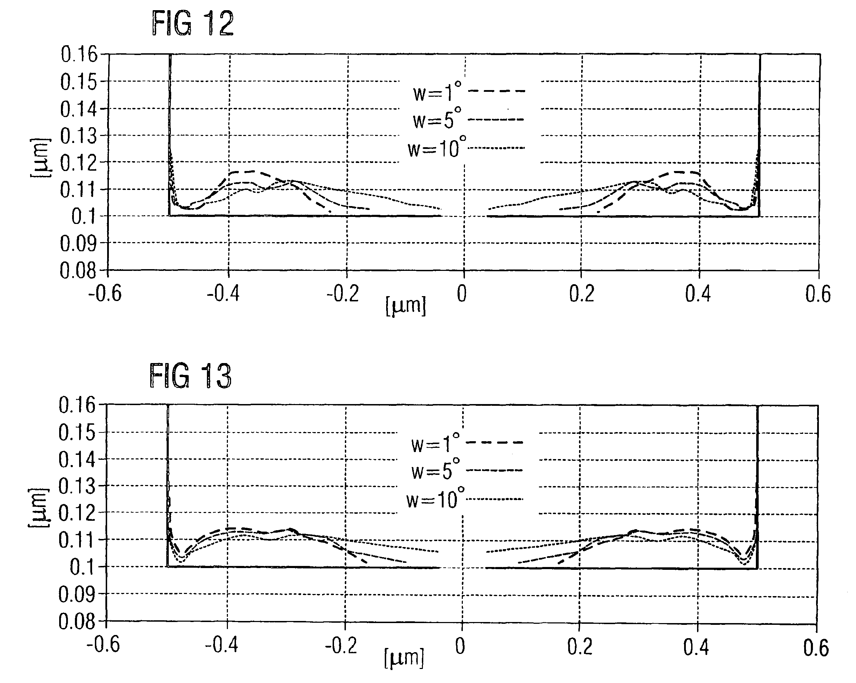

Figur 12 zeigt für das in Figur 11a dargestellt Ausführungsbeispiel Abscheideresultate für verschiedene Divergenzen von Teilchenstrahlen. Die gestrichelten Linien bezeichnen Schichtdicken mit Halbwertsbreiten von 1°, 5°, 10°. Analog zeigt das in Figur 13 dargestellte Abscheideprofil das Resultat einer Variation der Teilchenstrahldivergenzen für das in Figur 11c beschriebene Ausführungsbeispiel. Eine Loch- oder Ringstruktur bleibt im Falle der schmaleren Öffnung (Beispiel Figur 11a) auch bei größeren Divergenzen noch erhalten (siehe Figur 13 die Abflachung des Abscheideprofils zur Symmetriachse in der Umgebung der X-Koordinate "0 µm" in der Mitte des Diagramms).

Für die Öffnung mit dem größeren Durchmesser gelingt eine Ringstruktur mit verschwindender Schichtdicke am Ort der Symmetriachse gerade nur für eine Divergenz von 1°.

### Bezugszeichenliste

- α: Einfallswinkel
- A: Symmetrieachse
- B: Überhang
- C: Öffnung
- D1: erste dielektrische Schicht
- D2: zweite dielektrische Schicht
- FS: Füllschicht
- R: ringförmiger Teilchenniederschlag, Mikrostrukturelement
- S: Substrat
- T1: Target Nr. 1
- T2: Target Nr. 2
- TA: Teilchenablagerung auf dielektrischer Schicht
- TS: Teilchenstrahl
- U: Spannungsquelle für Beschleunigung aus Plasma

## Patentansprüche

1. Verfahren zur Herstellung eines ringförmigen Mikrostrukturelementes (R), insbesondere eines ringförmig angeordneten ein- oder mehrlagigen Dünnschichtfilms auf einem Substrat (S) zur Verwendung in einem magnetoresistivem Speicher, umfassend die Schritte:
- Bereitstellen des Substrates (S) mit einer Oberfläche,
- Bilden wenigstens einer Maskierschicht auf dem Substrat, so daß die Maskierschicht die Oberfläche unmittelbar bedeckt,
- Bilden einer Öffnung (C) in der Maskierschicht zum Freilegen eines Teilbereiches der Oberfläche,
- wobei die Maskierschicht innerhalb der Öffnung (C) mit einen Überhang (B) derart ausgebildet wird, daß die freigelegte Oberfläche zumindest teilweise durch den Überhang (B) von einem einfallenden Teilchenstrahl abgeschattet wird,
- Ablagern wenigstens eines Materials auf einer ersten Teilfläche der freigelegten Oberfläche mittels eines unter schrägem Einfallswinkel (α) auf das Substrat (S) gerichteten Teilchenstrahls (TS), welcher insbesondere einen von 90 Grad verschiedenen Winkel mit der Oberfläche einschließt,
- Drehen des Substrates (S) mit der Maskierschicht und der Öffnung (C) relativ zu dem gerichteten Teilchenstrahl (TS) zur Ablagerung des Materials auf wenigstens einer zweiten Teilfläche der freigelegten Oberfläche zur Bildung des ringförmigen Mikrostrukturelementes (R) auf der freigelegten Oberfläche des Substrates (S).

2. Verfahren nach Anspruch 1
**dadurch gekennzeichnet, daß**
die Drehung des Substrates (S) innerhalb der Substratebene ausgeführt wird, so daß der mit der Flächennormalen eingschlossene Winkel (α) des Teilchenstrahls (TS) während der Drehung nicht verändert wird.

3. Verfahren nach den Ansprüchen 1 oder 2,
**dadurch gekennzeichnet, daß**
der gerichtete Teilchenstrahl (TS) eine Divergenz von weniger als 10 Grad aufweist.

4. Verfahren nach einem der Ansprüche 1 bis 3,
**dadurch gekennzeichnet, daß**
die Öffnung (C) mit dem Überhang in einer kreisrunden oder elliptischen Form ausgebildet wird.

5. Verfahren nach einem der Ansprüche 1 bis 4,
**dadurch gekennzeichnet, daß**
die Maskierschicht aus wenigstens einer ersten (D1) und einer zweiten dielektrischen Schicht (D2) mit jeweils wenigstens einem einem Material gebildet wird, deren Selektivität gegenüber einem Ätzprozeß sich voneinander unterscheidet.

6. Verfahren nach einem der Ansprüche 1 bis 5,
**dadurch gekennzeichnet, daß**
zur Bildung der Öffnung (C) in der Maskierschicht
- das Material zur Bildung der ersten Schicht (D1) auf dem Substrat (S) abgeschieden wird,
- das Material zur Bildung der zweiten Schicht (D2) oberhalb der ersten Schicht (D1) abgeschieden wird,
- eine Resistmaske (M) mit einer belichteten und entwickelten Struktur auf der zweiten Schicht (D2) angeordnet wird,
- ein im wesentlichen anisotroper Ätzprozeß zur Übertragung der Struktur in die erste (D1) und die zweite Schicht (D2) zum Freilegen der Oberfläche des Substrates (C) durchgeführt wird,
- ein im wesentlichen isotroper Ätzprozeß durchgeführt wird, bei dem die erste Schicht (D1) mit hoher Selektivität gegenüber der zweiten Schicht (D2) geätzt wird, so daß der Überhang in der zweiten Schicht (D2) gebildet wird.

7. Verfahren nach einem der Ansprüche 1 bis 6,
**dadurch gekennzeichnet, daß**
der Winkel des Teilchenstrahls (TS) zu der Flächennormalen mindestens so groß gewählt wird, so daß aufgrund des abschattenden Überhangs das auf der freigelegten Oberfläche des Substrates (S) abgelagerte Material mit einer in der Mitte der freigelegten Oberfläche verschwindenden Dicke abgelagert wird.

8. Verfahren nach einem der Ansprüche 1 bis 7,
**dadurch gekennzeichnet, daß**
der Winkel (α) des Teilchenstrahls (TS) zu der Flächennormalen derart gering gewählt wird, daß aufgrund des abschattenden Überhangs das auf der freigelegten Oberfläche des Substrates (S) abgelagerte Material mit einer am äußeren Rande der freigelegten Oberfläche verschwindenden Dicke abgelagert wird.

9. Verfahren nach einem der Ansprüche 1 bis 8,
**dadurch gekennzeichnet, daß**
der Teilchenstrahl (TS) mittels einer Quelle aus der Gruppe umfassend: Ionenstrahlquelle, plasmaaktiviertes Sputtertarget, Ringkathode erzeugt wird.

## Claims

1. Method for producing an annular microstructure element (R), in particular an annularly arranged monolayer or multilayer thin film on a substrate (S) for use in a magnetoresistive memory, comprising the following steps:
- provision of the substrate (S) with a surface,
- formation of at least one masking layer on the substrate, so that the masking layer directly covers the surface,
- formation of an opening (C) in the masking layer for the purpose of uncovering a partial region of the surface,
- the masking layer being formed within the opening (C) with an overhang (B) in such a way that the uncovered surface is at least partially shaded from an incident particle beam by the overhang (B),
- deposition of at least one material on a first partial area of the uncovered surface by means of a particle beam (TS) which is directed at the substrate (S) at an oblique angle (α) of incidence and in particular forms an angle other than 90 degrees with the surface,
- rotation of the substrate (S) with the masking layer and the opening (C) relative to the directed particle beam (TS) for the purpose of depositing the material on at least a second partial area of the uncovered surface for the purpose of forming the annular microstructure element (R) on the uncovered surface of the substrate (S).

2. Method according to Claim 1,
**characterized in that**
the rotation of the substrate (S) is performed within the substrate plane, so that the angle (α) formed with the normal to the surface by the particle beam (TS) is not altered during the rotation.

3. Method according to Claim 1 or 2,
**characterized in that**
the directed particle beam (TS) has a divergence of less than 10 degrees.

4. Method according to one of Claims 1 to 3,
**characterized in that**
the opening (C) with the overhang is formed in a circular or elliptical form.

5. Method according to one of Claims 1 to 4,
**characterized in that**
the masking layer is formed from at least a first (D1) and a second dielectric layer (D2) each having at least one material, the selectivity of which with respect to an etching process differs from one another.

6. Method according to one of Claims 1 to 5,
**characterized in that**
in order to form the opening (C) in the masking layer,
- the material for forming the first layer (D1) is deposited on the substrate,
- the material for forming the second layer (D2) is deposited above the first layer (D1),
- a resist mask (M) with an exposed and developed structure is arranged on the second layer (D2),
- an essentially anisotropic etching process is carried out for the purpose of transferring the structure into the first (D1) and the second layer (D2) for the purpose of uncovering the surface of the substrate (C),
- an essentially isotropic etching process is carried out, during which the first layer (D1) is etched with high selectivity with respect to the second layer (D2), thereby forming the overhang in the second layer (D2).

7. Method according to one of Claims 1 to 6,
**characterized in that**
the angle between the particle beam (TS) and the normal to the surface is chosen at least with a magnitude such that, on account of the shading overhang, the material deposited on the uncovered surface of the substrate (S) is deposited with a thickness that vanishes in the center of the uncovered surface.

8. Method according to one of Claims 1 to 7,
**characterized in that**
the angle (α) between the particle beam (TS) and the normal to the surface is chosen to be so small that, on account of the shading overhang, the material deposited on the uncovered surface of the substrate (S) is deposited with a thickness that vanishes at the outer edge of the uncovered surface.

9. Method according to one of Claims 1 to 8,
**characterized in that**
the particle beam (TS) is generated by means of a source from the group comprising: ion beam source, plasma-activated sputtering target, annular cathode.

## Revendications

1. Procédé de production d'un élément (R) constituant une microstructure annulaire, notamment d'une pellicule en couche mince à une strate ou à plusieurs strates, disposée annulairement sur un substrat (S) à utiliser dans une mémoire magnétorésistive, comprenant les stades dans lesquels :
- on se procure le substrat (S) ayant une surface,
- on forme au moins une couche de masquage sur le substrat, de manière à ce que la couche de masquage recouvre directement la surface,
- on forme une ouverture (C) dans la couche de masquage pour mettre à nu une région partielle de la surface,
- la couche de masquage étant formée à l'intérieur de l'ouverture (C) avec un surplomb (B), de façon à ce que la surface mise à nu soit au moins en partie mise à l'abri par le surplomb (B) d'un faisceau de particules incident,
- on dépose au moins une matière sur une première surface partielle de la surface mise à nu au moyen d'un faisceau (TS) de particules dirigé sur le substrat (S) suivant un angle (α) d'incidence oblique qui fait notamment un angle différent de 90 degrés avec la surface,
- on fait tourner le substrat (S) ayant la couche de masquage et l'ouverture (C) par rapport au faisceau (TS) de particules dirigé pour déposer de la matière sur au moins une deuxième surface partielle de la surface mise à nu pour former l'élément (R) constituant une microstructure annulaire sur la surface mise à nu du substrat (S).

2. Procédé suivant la revendication 1,
**caractérisé en ce qu'**on effectue la rotation du substrat (S) dans le plan du substrat, de façon à ce que l'angle (α) que le faisceau (TS) de particules fait avec la normale à la surface ne soit pas modifié pendant la rotation.

3. Procédé suivant les revendications 1 ou 2,
**caractérisé en ce que** le faisceau (TS) de particules dirigé a une divergence de moins de 10 degrés.

4. Procédé suivant l'une des revendications 1 à 3,
**caractérisé en ce qu'**on donne à l'ouverture (C) ayant le surplomb une forme circulaire ou elliptique.

5. Procédé suivant l'une des revendications 1 à 4,
**caractérisé en ce que** l'on forme la couche de masquage en au moins une première (D1) et une deuxième (D2) couche diélectrique ayant respectivement des matières de sélectivité différentes l'une de l'autre vis-à-vis d'un processus d'attaque.

6. Procédé suivant l'une des revendications 1 à 5,
**caractérisé en ce que**, pour former l'ouverture (C) dans la couche de masquage,
- on dépose la matière de formation de la première couche (D1) sur le substrat (S),
- on dépose la matière de formation de la deuxième couche (D2) au-dessus de la première couche (D1),
- on met un masque (M) de réserve ayant une structure insolée et développée sur la deuxième couche (D2),
- on effectue un processus d'attaque essentiellement anisotrope pour transposer la structure à la première (D1) et la deuxième (D2) couche pour la mise à nu de la surface du substrat (C),
- on effectue un processus d'attaque essentiellement isotrope, dans lequel on attaque la première couche (D1) ayant une sélectivité plus grande que la deuxième couche (D2), de manière à former le surplomb dans la deuxième couche (D2).

7. Procédé suivant l'une des revendications 1 à 6,
**caractérisé en ce que** l'on choisit l'angle du faisceau (TS) de particules avec la normale à la surface au moins si grand qu'en raison du surplomb de mise à l'abri, la matière déposée sur la surface mise à nu du substrat (S) est déposée en ayant une épaisseur qui s'évanouit au milieu de la surface mise à nu.

8. Procédé suivant l'une des revendications 1 à 7,
**caractérisé en ce que** l'on choisit l'angle (α) du faisceau (TS) de particules avec la normale à la surface si petit qu'en raison du surplomb de mise à l'abri, la matière déposée sur la surface mise à nu du substrat (S) est déposée en ayant une épaisseur qui s'évanouit sur le bord extérieur de la surface mise à nu.

9. Procédé suivant l'une des revendications 1 à 8,
**caractérisé en ce que** l'on produit le faisceau (TS) de particules au moyen d'une source choisie dans le groupe : source de faisceau d'ions, cible de pulvérisation cathodique activée par plasma, cathode annulaire.
